# EUROPÄISCHE PATENTSCHRIFT

(11) **EP 1 712 401 B1**
(45) Veröffentlichungstag und Bekanntmachung des Hinweises auf die Patenterteilung: **10.06.2015**
(21) Anmeldenummer: 06007309.5
(22) Anmeldetag: 06.04.2006
(51) Int. Cl.: B60L 7/26, B60L 3/10, B60L 15/20, B60L 7/00

(54) **Flurförderzeug**
Industrial truck
Chariot de manutention

(30) Priorität: 12.04.2005 DE 102005016850
(43) Veröffentlichungstag der Anmeldung: 18.10.2006
(73) Patentinhaber: OM Carrelli Elevatori S.p.A., 20020 Lainate (MI) (IT)
(72) Erfinder: Accorsi, Marco, 46023 Gonzaga (MN) (IT); Hoock, Michael, 22299 Hamburg (DE); Mariotti, Fabio, 42016 Guastalla (RE) (IT)
(74) Vertreter: Geirhos, Johann

(56) Entgegenhaltungen:
- EP-A2- 0 595 445
- EP-A2- 0 908 348
- DE-A1- 19 743 735

## Beschreibung

Die Erfindung betrifft ein Flurförderzeug, insbesondere Lagertechnikgerät, mit einer elektrischen Fahrantriebsmaschine, die zum Bremsen als elektrische Motorbremse mit einem variablen Bremsmoment betreibbar ist, und mit einer mit der Fahrantriebsmaschine in Wirkverbindung stehenden mechanischen Bremseinrichtung, die von einer Lösestellung in eine Bremsstellung beaufschlagbar ist und in der Bremsstellung ein fest eingestelltes Bremsmoment aufweist.

Als Lagertechnikgeräte ausgebildete Flurförderzeuge weisen eine elektrische Fahrantriebsmaschine auf, die mittels eines Getriebes mit einem Antriebsrad in Wirkverbindung steht. Mit der Fahrantriebsmaschine steht weiterhin eine mechanische Bremseinrichtung, beispielsweise eine Federspeicherbremse, in Wirkverbindung, die von einer Lösestellung in eine Bremsstellung beaufschlagbar ist, in der die Bremseinrichtung ein fest eingestelltes Bremsmoment aufweist. Diese mechanische Bremseinrichtung ist im normalen Betrieb des Flurförderzeugs in die Lösestellung beaufschlagt und kann in Bremsstellung beaufschlagt werden, wodurch die mechanische Bremseinrichtung als Feststellbremse oder als automatisch einfallende Bremse verwendet werden kann, die beispielsweise beim Verlassen des Flurförderzeugs durch eine Bedienperson oder beim Abstellen des Flurförderzeugs in die Bremsstellung beaufschlagbar ist. Mit dieser mechanischen Bremseinrichtung ist ebenfalls eine Sicherheitsbremse erzielbar, beispielsweise durch eine Beaufschlagung der Bremseinrichtung in die Bremsstellung bei einer Betriebs- oder Funktionsstörung des Flurförderzeugs oder bei einer Betätigung eines Not-Aus-Schalters.

Als Betriebsbremse, die ein variables Bremsmoment aufweist und mit der ein regulierbares Abbremsen des Flurförderzeugs erzielbar ist, ist bei derartigen Flurförderzeugen bekannt, die Fahräntriebsmaschine als elektrische Motorbremse zu verwenden. Hierbei kann die Fahrantriebsmaschine als Generator betrieben werden, wobei eine Nutzstrombremsung erzielt wird und kinetische Energie des Flurförderzeugs als elektrische Energie in einen Batterieblock des Flurförderzeugs zurückgespeist werden kann. Das maximale Bremsmoment der Betriebsbremse ist hierbei derart auszulegen, dass das Flurförderzeug bei maximaler Last und maximaler Fahrgeschwindigkeit mit einer geforderten Verzögerung abgebremst werden kann.

Ein gattungsgemäßes Flurförderzeug ist aus der EP 0 865 959 A1 bekannt. Bei diesem Flurförderzeug wird die elektrische Motorbremse der Fahrantriebmaschine als Betriebsbremse mit variablem Bremsmoment verwendet. Die als Federspeicherbremse ausgebildete mechanische Bremseinrichtung dient als Feststellbremse und Sicherheitsbremse. Bei Flurförderzeugen, die bei hohen Fahrgeschwindigkeiten und/oder hohen maximalen Lasten eingesetzt werden, kann jedoch mit der elektrischen Motorbremse der Fahrantriebsmaschine das maximale Bremsmoment nicht zur Verfügung gestellt werden, um das Flurförderzeug bei maximaler Fahrgeschwindigkeit und/oder maximaler Last mit der geforderten Verzögerung sicher abzubremsen.

Aus der gattungsgemäßen DE 693 18 670 T2 ist ein Flurförderzeug mit einer mechanischen Bremseinrichtung, die ein festes Bremsmoment aufweist, und einer von der Fahrantriebsmaschine gebildeten elektrischen Motorbremse mit variablem Bremsmoment bekannt. Bei diesem Flurförderzeug erfolgt bei einer Betriebsbremsung ein Abbremsen des Flurförderzeugs mittels der elektrischen Motorbremse. Wird bei einer derartigen Betriebsbremsung durch die elektrische Motorbremse eine zu geringe Verzögerung des Flurförderzeugs ermittelt, wird die Abbremsung durch die elektrische Motorbremse beendet und das Flurförderzeug durch eine Betätigung der mechanischen Bremseinrichtung in die Bremsstellung abgebremst. Hierbei ist jedoch die mechanische Bremseinrichtung auf das maximale Bremsmoment auszulegen, um das Flurförderzeug bei maximaler Last und maximaler Fahrgeschwindigkeit mit der geforderten Verzögerung abzubremsen. Hierdurch ergibt sich ein entsprechend hoher Bauraumbedarf und Herstellungsaufwand für die mechanische Bremseinrichtung.

Aus der DE 197 43 735, welches als nächstliegender Stand der Technik angesehen wird und die Merkmale des unabhängigen Anspruchs 1 zeigt, ist ein gattungsgemäßes Flurförderzeug mit einem elektrischen Fahrantriebsmotor, der zum Bremsen als elektrische Motorbremse betreibbar ist, und mit einer mit dem Fahrantriebsmotor in Wirkverbindung stehenden mechanischen Bremseinrichtung bekannt. Bei einer Abbremsung des Flurförderzeugs nach der Betätigung eines Totmannschalters wird ein Abbremsvorgang mit einem veränderbaren Bremsmoment erzeugt. Bei diesem Abbremsvorgang wird die Motorbremse durch den Fahrantriebsmotor derart angesteuert, dass beim Loslassen des Totmannschalters sich das von der Motorbremse erzeugte Bremsmoment über die Zeit kontinuierlich steigert. Die Speicherbremse wird mit zeitlicher Verzögerung nach der von dem Fahrmotor gebildeten Betriebsbremse betätigt.

Der vorliegenden Erfindung liegt die Aufgabe zugrunde, ein gattungsgemäßes Flurförderzeug zur Verfügung zu stellen, das mit geringem Herstellaufwand eine sichere Abbremsung des Flurförderzeugs ermöglicht.

Diese Aufgabe wird erfindungsgemäß dadurch gelöst, dass zur Erzeugung eines einstellbaren Bremsmoments die Motorbremse der Fahrantriebsmaschine und die mechanische Bremseinrichtung kombiniert betätigbar sind, wobei zur Erzeugung des einstellbaren Bremsmoments zwischen einem minimalen Bremsmoment und einem maximalen Bremsmoment ausgehend von dem minimalen Bremsmoment bis zum fest eingestellten Bremsmoment der mechanischen Bremseinrichtung die mechanische Bremseinrichtung in die Lösestellung beaufschagt ist und die Motorbremse der Fahrantriebsmaschine beaufschlagbar ist, so dass das einstellbare Bremsmoment ausschließlich durch das variable Bremsmoment der Motorbremse der Fahrantriebsmaschine erzeugt wird, und ausgehend von dem fest eingestellten Bremsmoment der mechanischen Bremseinrichtung bis zum maximalen Bremsmoment die mechanische Bremseinrichtung in die Bremsstellung und die Motorbremse der Fahrantriebsmaschine beaufschlagbar sind, so dass das einstellbare Bremsmoment ausschließlich durch eine gemeinsame und gleichzeitige Betätigung der Motorbremse der Fahrantriebsmaschine und der mechanischen Bremseinrichtung erzeugt wird und das einstellbare Bremsmoment aus der Summe des festen Bremsmoments der mechanischen Bremseinrichtung und des variablen Bremsmoments der Motorbremse der Fahrantriebsmaschine zusammengesetzt ist.

Erfindungsgemäß ist somit bei einer Abbremsung des Flurförderzeugs die elektrische Motorbremse und die mechanische Bremseinrichtung kombiniert betätigbar, um ein einstellbares Bremsmoment zum Abbremsen des Flurförderzeugs zu erzeugen. Erfindungsgemäß setzt sich somit das einstellbare Bremsmoment während einer Abbremsung aus dem variablen Bremsmoment der elektrischen Motorbremse und dem festen Bremsmoment der mechanischen Bremseinrichtung zusammen. Hierdurch ist es auf einfache Weise möglich, bei Flurförderzeugen, die bei hohen maximalen Lasten und/oder hohen maximalen Fahrgeschwindigkeiten betrieben werden, ein ausreichendes maximales, aus dem festen Bremsmoment der mechanischen Bremseinrichtung und dem variablen Bremsmoment der Motorbremse zusammengesetztes, Bremsmoment zur Verfügung zu stellen, um das Flurförderzeug bei einer Betriebsbremsung mit der geforderten Verzögerung abzubremsen. Durch die kombinierte Betätigung der elektrischen Motorbremse und der mechanischen Bremseinrichtung bei einem erfindungsgemäßen Flurförderzeug kann hierbei das fest eingestellte Bremsmoment der mechanischen Bremseinrichtung gegenüber Flurförderzeugen, bei denen die mechanische Bremseinrichtung auf das maximale Bremsmoment ausgelegt ist, um das Flurförderzeug bei maximaler Last und/oder maximaler Fahrgeschwindigkeit mit der geforderten Verzögerung abzubremsen, verringert werden. Hierdurch sind bei einem erfindungsgemäßen Flurförderzeug für die mechanische Bremseinrichtung ein geringer Bauraumbedarf und geringe Herstellkosten erzielbar, wodurch mit geringem Herstellaufwand eine sichere Abbremsung des Flurförderzeugs erzielt werden kann.

Das einstellbare Bremsmoment lässt sich bei einer kombinierten Betätigung der elektrischen Motorbremse und der mechanischen Bremseinrichtung aus dem variablen Bremsmoment der Motorbremse und dem festen Bremsmoment der mechanischen Bremseinrichtung in erfindungsgemäßer Weise zusammensetzen, wenn gemäß der Erfindung zur Erzeugung des einstellbaren Bremsmoments zwischen einem minimalen Bremsmoment und einem maximalen Bremsmoment ausgehend von dem minimalen Bremsmoment bis zum fest eingestellten Bremsmoment der mechanische Bremseinrichtung die mechanische Bremseinrichtung in die Lösestellung beaufschagt ist und die Motorbremse der Fahrantriebsmaschine beaufschlagbar ist, so dass das einstellbare Bremsmoment ausschließlich durch das variable Bremsmoment der Motorbremse der Fahrantriebsmaschine erzeugt wird, und ausgehend von dem fest eingestellten Bremsmoment der mechanischen Bremseinrichtung bis zum maximalen Bremsmoment die mechanische Bremseinrichtung in die Bremsstellung und die Motorbremse der Fahrantriebsmaschine beaufschlagbar sind, so dass das einstellbare Bremsmoment ausschließlich durch eine gemeinsame und gleichzeitige Betätigung der Motorbremse der Fahrantriebsmaschine und der mechanischen Bremseinrichtung erzeugt wird und das einstellbare Bremsmoment aus der Summe des festen Bremsmoments der mechanischen Bremseinrichtung und des variablen Bremsmoments der Motorbremse der Fahrantriebsmaschine zusammengesetzt ist. Sofern zum Abbremsen des Flurförderzeugs ein Bremsmoment erforderlich ist, das kleiner als das fest eingestellte Bremsmoment der mechanischen Bremseinrichtung ist, erfolgt somit die Erzeugung des einstellbaren Bremsmoments ausschließlich durch das variable Bremsmoment der elektrischen Motorbremse. Übersteigt das zum Abbremsen des Flurförderzeugs erforderliche Bremsmoment das feste Bremsmoment der mechanischen Bremseinrichtung, wird das Bremsmoment durch die gemeinsame Betätigung der Motorbremse und der mechanischen Bremseinrichtung gebildet und somit von dem variablen Bremsmoment der Motorbremse und dem festen Bremsmoment der mechanischen Bremseinrichtung erzeugt. Hierdurch kann das einstellbare Bremsmoment auf einfache Weise durch entsprechende Ansteuerung der elektrischen Motorbremse und der mechanischen Bremseinrichtung zwischen dem minimalen Bremsmoment und dem maximalen Bremsmoment variiert werden

Das einstellbare Bremsmoment ist gemäß einer vorteilhaften Weiterbildung der Erfindung in Abhängigkeit von mindestens einem Parameter des Flurförderzeugs, insbesondre der Fahrgeschwindigkeit und/oder der Last und/oder dem Lenkwinkel des Flurförderzeugs, steuerbar. Hierdurch kann eine von bestimmten Fahr- und/oder Betriebszuständen des Flurförderzeugs abhängige, beispielsweise eine geschwindigkeitsabhängige, lastabhängige oder eine von einer Kurvenfahrt des Flurförderzeugs abhängige, Steuerung des Bremsmoments erzielt werden, wobei gefährliche Betriebs- und/oder Fahrzustände durch zu hohe oder zu geringe Bremsmomente und somit zu hohe oder zu geringe Verzögerungen des Flurförderzeugs auf einfache Weise vermieden werden können.

Zweckmäßigerweise ist zur Steuerung der Fahräntriebsmaschine und der mechanischen Bremseinrichtung eine elektronische Steuereinrichtung vorgesehen. Mit einer elektronischen Steuereinrichtung kann die mechanische Bremseinrichtung und die elektrische Motorbremse der Fahrantriebsmaschine mit geringem Aufwand zur Erzeugung eines einstellbaren Bremsmoments angesteuert werden, wobei eine von bestimmten Fahr- und/oder Betriebszuständen des Flurförderzeugs abhängige Steuerung des Bremsmoments auf einfache Weise erzielbar ist.

Besondere Vorteile ergeben sich, wenn gemäß einer Weiterbildung der Erfindung während einer Abbremsung mittels der Steuereinrichtung durch Veränderung des einstellbaren Bremsmoments ein Blockieren eines mit der Fahrantriebsmaschine in Wirkverbindung stehenden Antriebsrades vermeidbar ist. Durch das einstellbare Bremsmoment ist bei einer Abbremsung des Flurförderzeugs auf einfache Weise möglich, durch entsprechende Verringerung des Bremsmoments ein Blockieren des Antriebsrades zu vermeiden. Durch die erfindungsgemäße Ansteuerung der mechanischen Bremseinrichtung und der elektrischen Motorbremse der Fahrantriebsmaschine und Erzeugung eines zwischen dem minimalen Bremsmoment und dem maximalen Bremsmoment einstellbaren Bremsmoment wird während einer Abbremsung ermöglicht, das Bremsmoment zu verändem und somit das Blockieren des Antriebsrades zu vermeiden. Hierdurch kann ein geringer Bremsweg erzielt und beim Abbremsen die Lenkbarkeit und somit die Richtungsstabilität des Flurförderzeugs sichergestellt werden, wobei weiterhin der Verschleiß des Antriebsrades verringert werden kann.

Eine Blockieren des Antriebrades während des Abbremsens des Flurförderzeugs kann mit geringem Bauaufwand vermieden werden, wenn die elektronische Steuereinrichtung mit einer die Drehzahl der Fahrantriebsmaschine erfassenden Sensoreinrichtung in Wirkverbindung steht, wobei die elektronische Steuereinrichtung aus dem Signal der Sensoreinrichtung eine Istverzögerung bestimmt, die Istverzögerung mit einer vorgegebenen Sollverzögerung vergleicht und wobei die elektronische Steuereinrichtung die Fahrantriebsmaschine und die mechanische Bremseinrichtung derart ansteuert, dass das einstellbare Bremsmoment erhöht wird, wenn die Istverzögerung niedriger als die Sollverzögerung ist, und das einstellbare Bremsmoment verringert wird, wenn die Istverzögerung höher als die Sollverzögerung ist. Hierdurch ist es auf einfache Weise möglich, in einem Bremszustand, in dem die Istverzögerung höher als die Sollverzögerung ist, das Bremsmoment zu reduzieren und somit ein Blockieren des Antriebsrades zu vermeiden. Sofern in einem Bremszustand die Istverzögerung geringer als die Sollverzögerung ist, wird das Bremsmoment erhöht, wodurch eine Abbremsung mit minimalem Bremsweg erzielt wird.

Die Sollverzögerung kann hierbei in Abhängigkeit von mindestens einem Parameter des Flurförderzeugs, insbesondere der Fahrgeschwindigkeit und/oder der Last und/oder dem Lenkwinkel des Flurförderzeugs, vorgegeben werden, wodurch für bestimmten Fahr- und/oder Betriebszuständen des Flurförderzeugs unterschiedliche Sollverzögerungen vorgegeben werden können, beispielsweise eine geforderte, von der Fahrgeschwindigkeit des Flurförderzeugs abhängige Mindestverzögerung.

Die mechanische Bremseinrichtung kann hierbei als elektro-magnetisch betätigbare Federspeicherbremse oder als elektro-hydraulisch betätigbare Federspeicherbremse ausgebildet sein.

Weitere Vorteile und Einzelheiten der Erfindung werden anhand des in den Figuren dargestellten Ausführungsbeispiels näher erläutert. Hierbei zeigt
- Figur 1: ein erfindungsgemäßes Flurförderzeug in einer perspektivischer Ansicht,
- Figur 2: die Fahrantriebsmaschine in einer schematischen Darstellung,
- Figur 3: den Verlauf des einstellbaren Bremsmoment und
- Figur 4: eine elektronische Steuereinrichtung in einer schematischen Darstellung.

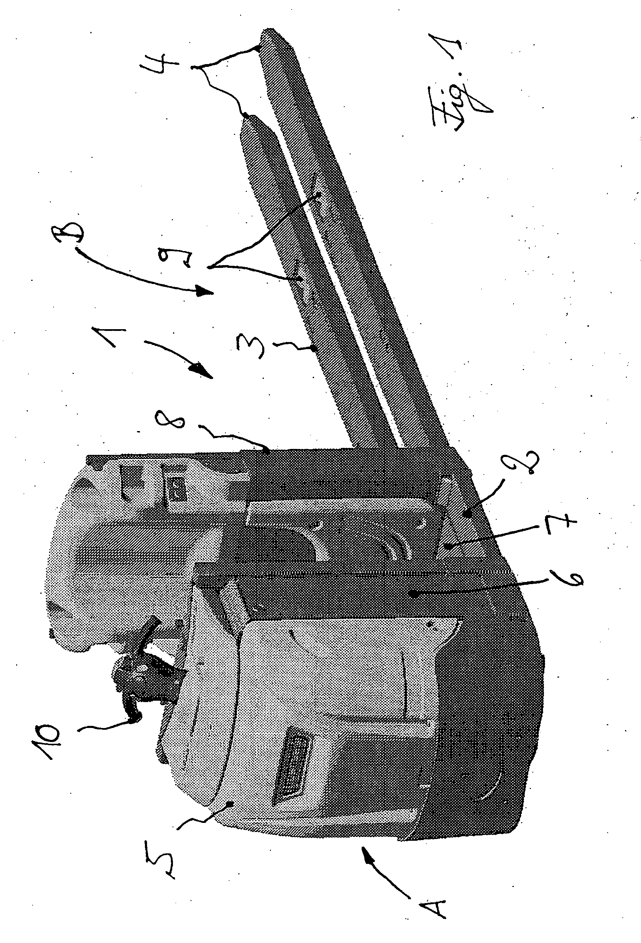

Die Figur 1 zeigt ein erfindungsgemäßes als Lagertechnikfahrzeug 1, beispielsweise als Kommissionierer, ausgebildetes Flurförderzeug. Das Lagertechnikfahrzeug 1 weist einen Antriebsteil A und einen anhebbaren bzw. absenkbaren Lastteil B auf, wobei als tragendes Bauteil des Antriebsteils A ein Rahmen 2 und als tragendes Bauteil des Lastteils B ein von zwei Lastarmen 4 gebildeter Lastrahmen 3 vorgesehen ist.

An dem vorderen Bereich des Antriebsteils A ist unter eine Haube 5 eine elektrische Fahrantriebsmaschine lenkbar an dem Rahmen 2 angeordnet. Unter der Haube 5 sind an dem Rahmen 2 weitere Aggregate angeordnet, beispielsweise eine Leistungselektronikeinheit und ein elektrischer Hubmotor zum Antrieb einer Hydraulikpumpe, mittels der eine Hubvorrichtung versorgbar ist.

In Längsrichtung des Lagertechnikfahrzeugs 1 benachbart zur Haube 5 ist am Rahmen 2 ein Batteriefach 6 zur Aufnahme eines Batterieblocks ausgebildet. In Längsrichtung des Lagertechnikfahrzeugs 1 benachbart zum Batteriefach 6 ist eine Fahrerstandplattform 7 am Rahmen 2 angeordnet. Am hinteren Bereich des Rahmens 2 ist in Längsrichtung des Lagertechnikfahrzeugs 1 benachbart zu der Fahrerstandplattform 7 ein vertikaler Rahmenabschnitt 8 angeordnet, in dem der anhebbare und absenkbare Lastrahmen 3 vertikal geführt ist. An den lastsseitigen Enden der Lastarme 4 des Lastrahmens 3 sind Lastrollen 9 angeordnet, die den Lastteil B des Kommissionierers 1 auf der Fahrbahn abstützen.

An der Oberseite des Antriebsteils A ist ein als Lenkgeber ausgebildetes Bedienelement 10 angeordnet, das mit Bedienelementen versehen ist, beispielsweise einem Fahrschalter zur Steuerung der Fahrantriebsmaschine und einem Totmannschalter sowie gegebenenfalls einem Betriebsbremsschalter.

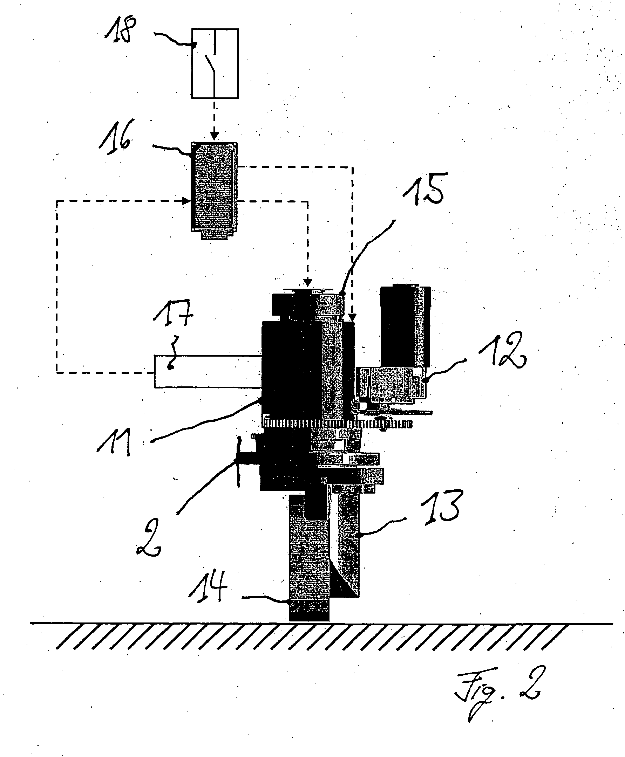

In der Figur 2 ist die elektrische Fahrantriebsmaschine 11 dargestellt, beispielsweise ein als Asynchronmaschine ausgebildeter Elektromotor, die zum Lenken des Lagertechnikgerätes 1 am Rahmen 2 drehbar befestigt ist, wobei ein Lenkantrieb 12 vorgesehen ist, der mit der Fahrantriebsmaschine 11 über ein Drehgetriebe in Wirkverbindung steht. Die Fahrantriebsmaschine 11 steht mittels eines Getriebes 13 mit dem Antriebsrad 14 des Lagertechnikgerätes 1 in trieblicher Verbindung.

Die Fahrantriebsmaschine 11 steht weiterhin mit einer mechanischen Bremseinrichtung 15 in Wirkverbindung, die bevorzugt als elektro-magnetisch betätigbare Federspeicherbremse ausgebildet ist. Die Bremseinrichtung 15 weist hierbei in der Bremsstellung ein fest eingestelltes Bremsmoment auf und ist bei einer Ansteuerung von einer Lösestellung in eine Bremsstellung betätigbar.

Die Fahrantriebsmaschine 11 ist zum Antrieb des Lagertechnikfahrzeugs 1 als Motor betreibbar. Zum Abbremsen des Lagertechnikfahrzeugs 1 ist die Fahrantriebsmaschine 11 durch Gegenstrombremsen als elektrische Motorbremse betreibbar, wobei ein variables Bremsmoment erzielbar ist und eine Energierückgewinnung in den Batterieblock ermöglicht wird.

Zur Steuerung der Fahrantriebsmaschine 11 und der mechanischen Bremseinrichtung 15 ist eine elektronische Steuereinrichtung 16 vorgesehen, die eingangsseitig mit einer die Drehzahl der Fahrantriebsmaschine 11 erfassenden Sensoreinrichtung 17 und einer Bremsvorgabeeinrichtung 18 in Wirkverbindung steht. Die Bremsvorgabeeinrichtung 18 kann hierbei von dem Betriebsbremsschalter, dem Totmannschalter oder dem Fahrschalter gebildet werden, wobei eine Abbremsung durch Betätigung des Betriebsbremsschalter bzw. durch Loslassen des Totmannschalters sowie durch Loslassen des Fahrschalters und somit dessen Beaufschlagung in die Neutralstellung oder durch Umschalten der Fahrtrichtung in die Gegenrichtung mittels des Fahrschalters und somit Reversieren der Fahrtrichtung eingeleitet werden kann.

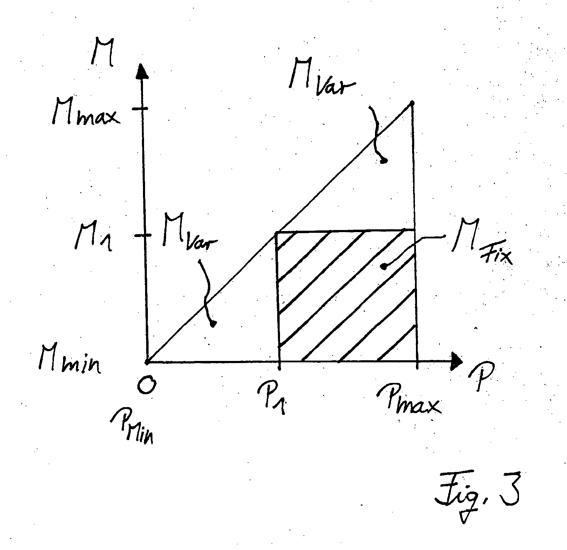

In der Figur 3 ist der Verlauf des einstellbaren Bremsmoments M über einen Parameter P dargestellt, beispielsweise die Last oder die Fahrgeschwindigkeit oder den Lenkwinkel des Lagertechnikfahrzeugs 1. Das Bremsmoment M ist ausgehend von dem minimalen Bremsmoment Mₘᵢₙ bei minimalem Parameterwert Pₘᵢₙ bis zum maximalen Bremsmoment Mₘₐₓ bei maximalem Parameterwert Pₘₐₓ einstellbar und weist einen linearen Verlauf auf.

Ausgehend von dem minimalen Bremsmoment Mₘᵢₙ beim Parameterwert Pₘᵢₙ bis zu dem Bremsmoment M₁ beim Parameterwert P₁, wobei das Bremsmoment M₁ dem fest eingestellten Bremsmoment M_{fix} der mechanischen Bremseinrichtung 15 entspricht, erfolgt der Aufbau des Bremsmoment M ausschließlich durch entsprechende Ansteuerung der Motorbremse der Fahrantriebsmaschine 11 und somit dem variablen Bremsmoment Mᵥₐᵣ der elektrischen Motorbremse. Die mechanische Bremseinrichtung 15 befindet sich hierbei in der Lösestellung. Von dem Bremsmoment M₁ bis zum maximalen Bremsmoment Mₘₐₓ bei dem Parameterwert Pₘₐₓ erfolgt der Aufbau des Bremsmoment durch Ansteuerung der mechanischen Bremseinrichtung 15 in die Bremsstellung und gleichzeitiger Ansteuerung der elektrischen Motorbremse der Fahrantriebsmaschine 11. Das Bremsmoment M setzt sich somit in diesem Bereich bei der kombinierten Betätigung der elektrischen Motorbremse und der mechanischen Bremse 15 aus dem festen Bremsmoment M_{fix} der mechanischen Bremseinrichtung 15 und dem variablen Bremsmoment Mᵥₐᵣ der elektrischen Motorbremse zusammen.

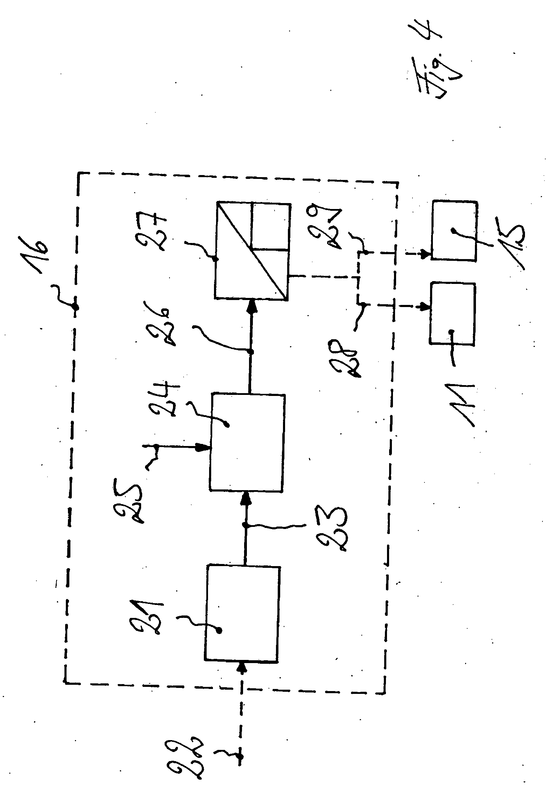

In der Figur 4 ist der Aufbau der elektronischen Steuereinrichtung 16 zur Ansteuerung der elektrischen Motorbremse der Fahrantriebsmaschine 11 und der mechanischen Bremseinrichtung 15 dargestellt. Die elektronische Steuereinrichtung 20 weist einen Schritt 21 auf, in dem als Eingangssignal 22 das Signal der Sensoreinrichtung 17 und somit der Drehzahlistwert der Fahrantriebsmaschine 11 ansteht. In dem Schritt 21 erzeugt die Steuereinrichtung 16 hierbei aus dem Drehzahlistwert durch zeitliche Ableitung als Ausgangssignal 23 eine Istverzögerung des abzubremsenden Antriebsrades 14. Diese Istverzögerung wird einem weiteren Schritt 24 als Eingangssignal zugeführt, in dem als weiteres Eingangssignal 25 eine Sollverzögerung ansteht, beispielsweise eine in Abhängigkeit von der Fahrgeschwindigkeit vorgegebene Mindestverzögerung, wobei in dem Schritt 24 ein Vergleich der Istverzögerung mit der Sollverzögerung erfolgt. Im Schritt 24 wird aus der Abweichung der Istverzögerung von der Sollverzögerung als Ausgangssignal 26 ein Parameterwert P erzeugt, der einem Schritt 27 als Eingangssignal zugeführt wird. In dem Schritt 27 wird aus dem Eingangssignal 26 und somit dem Parameterwert P entsprechend dem Verlauf des Bremsmoment M der Figur 3 ein Ansteuersignal 28 für die elektrische Motorbremse der Fahrantriebsmaschine 11 und ein Ansteuersignal 29 für die mechanische Bremseinrichtung 15 als Ausgangssignal erzeugt.

Die elektronische Steuereinrichtung 16 steuert hierbei die elektrische Motorbremse der Fahrantriebsmaschine 11 und die mechanische Bremseinrichtung 15 in Abhängigkeit von der ermittelten Abweichung der Istverzögerung von der Sollverzögerung derart an, dass bei einer die Sollverzögerung unterschreitenden Istverzögerung des Antriebsrades 14 das Bremsmoment M erhöht wird und entsprechend bei einer die Sollverzögerung übersteigenden Istverzögerung des Antriebsrades 14 das Bremsmoment M reduziert wird.

Durch diese Steuerung des Bremsmoments kann während einer Abbremsung ein Blockieren des Antriebsrades 14 durch entsprechende Reduzierung des Bremsmoment M vermieden werden. Hierdurch kann insbesondere beim Betrieb des Lagertechnikgerätes 1 auf Bodenbelägen mit niedrigen Reibungskoeffizienten, beispielsweise nassen oder verschmutzten Bodenbelägen bzw. bei Bodenbelägen mit glatter Oberfläche, ein kurzer Bremsweg des Lagertechnikgerätes 1 erzielt werden. Zudem kann bei statischen und/oder dynamischen Änderung der Radaufstandkraft des Antriebsrades 14, beispielsweise beim Befahren einer Rampe, bei einer Kurvenfahrt oder einer fahrtrichtungsabhängigen Abbremsung, ein Blockieren des Antriebsrades 14 bei einer Betriebsbremsung vermieden werden. Darüber hinaus ist durch die Vermeidung des Blockierens des Antriebsrades ein geringer Verschleiß des Antriebrades 14 erzielbar. Weiterhin wird hierdurch während der Abbremsung die Lenkbarkeit des Lagertechnikgerätes 1 und somit die Richtungsstabilität des Lagertechnikgerätes 1 sichergestellt.

Durch die erfindungsgemäße Kombination des einstellbaren Bremsmoment M aus dem variablen Bremsmoment Mᵥₐᵣ der elektrischen Motorbremse der Fahrantriebsmaschine 11 und dem festen Bremsmoment M_{fix} der mechanischen Bremseinrichtung 15 kann hierbei bei Flurförderzeugen, die bei hohen Fahrgeschwindigkeiten und/oder hohen Lasten betrieben werden, auf einfache und kostengünstige Weise ein maximales Bremsmoment Mₘₐₓ zur Verfügung gestellt werden, mit dem ein sicheres Abbremsen des Flurförderzeugs mit einer geforderten Verzögerung sichergestellt wird, wobei durch die Einstellbarkeit des Bremsmoments M ein Blockieren des Antriebsrads wirksam vermieden werden kann.

## Patentansprüche

1. Flurförderzeug (1) mit einer elektrischen Fahrantriebsmaschine (11), die zum Bremsen als elektrische Motorbremse mit einem variablen Bremsmoment (Mᵥₐᵣ) betreibbar ist, und mit einer mit der Fahrantriebsmaschine (11) in Wirkverbindung stehenden mechanischen Bremseinrichtung (15), die von einer Lösestellung in eine Bremsstellung beaufschlagbar ist und in der Bremsstellung einen fest eingestellten Bremsmomentwert (M_{fix}) aufweist, wobei zur Erzeugung eines einstellbaren Bremsmoments (M) die Motorbremse der Fahrantriebsmaschine (11) und die mechanische Bremseinrichtung (15) kombiniert betätigbar sind, **dadurch gekennzeichnet, dass** zur Erzeugung des für das Flurförderfahrzeug (1) einstellbaren Bremsmoments (M) in einem ersten Bereich zwischen einem minimalen Bremsmoment (Mₘᵢₙ) und einem maximalen Bremsmoment (Mₘₐₓ) ausgehend von dem minimalen Bremsmoment (Mₘᵢₙ) bis zum Bremsmoment, welches dem fest eingestellten Bremsmomentwert (M_{fix}) der mechanischen Bremseinrichtung (15) entspricht, die mechanische Bremseinrichtung (15) in der Lösestellung ist und die Motorbremse der Fahrantriebsmaschine (11) beaufschlagt wird, so dass das für das Flurförderfahrzeug (1) einstellbare Bremsmoment (M) ausschließlich durch das variable Bremsmoment (Mᵥₐᵣ) der Motorbremse der Fahrantriebsmaschine (11) erzeugt wird, und in einem zweiten Bereich ausgehend von dem Bremsmoment, welches dem fest eingestellten Bremsmomentwert (M_{fix}) der mechanischen Bremseinrichtung (15) entspricht, bis zum maximalen Bremsmoment (Mₘₐₓ) für das Flurfördenfahrzeug (1) die mechanische Bremseinrichtung (15) in der Bremsstellung ist und die Motorbremse der Fahrantriebsmaschine (11) beaufschlagt wird, so dass das für das Flurförderfahrzeug (1) einstellbare Bremsmoment (M) durch eine gemeinsame und gleichzeitige Betätigung der Motorbremse der Fahrantriebsmaschine (11) und der mechanischen Bremseinrichtung (15) erzeugt wird und das für das Flurförderfahrzeug (1) einstellbare Bremsmoment (M) aus der Summe des fest eingestellten Bremsmomentwerts (M_{fix}) der mechanischen Bremseinrichtung (15) und des variablen Bremsmomentswerts (Mᵥₐᵣ) der Motorbremse der Fahrantriebsmaschine (11) zusammengesetzt ist.

2. Flurförderzeug nach Anspruch 1, **dadurch gekennzeichnet, dass** das einstellbare Bremsmoment (M) in Abhängigkeit von mindestens einem Parameter (P) des Flurförderzeugs, insbesondere der Fahrgeschwindigkeit und/oder der Last und/oder dem Lenkwinkel des Flurförderzeugs, steuerbar ist.

3. Flurförderzeug nach Anspruch 1 oder 2, **dadurch gekennzeichnet, dass** zur Steuerung der Fahrantriebsmaschine (11) und der mechanischen Bremseinrichtung (15) eine elektronische Steuereinrichtung (16) vorgesehen ist.

4. Flurförderzeug nach Anspruch 3, **dadurch gekennzeichnet, dass** während einer Abbremsung mittels der Steuereinrichtung (16) durch Veränderung des einstellbaren Bremsmoment (M) ein Blockieren eines mit der Fahrantriebsmaschine (11) in Wirkverbindung stehenden Antriebsrades (14) vermeidbar ist.

5. Flurförderzeug nach Anspruch 3 oder 4, **dadurch gekennzeichnet, dass** die elektronische Steuereinrichtung (16) mit einer die Drehzahl der Fahrantriebsmaschine (11) erfassenden Sensoreinrichtung (17) in Wirkverbindung steht, wobei die elektronische Steuereinrichtung (16) aus dem Signal der Sensoreinrichtung (17) eine Istverzögerung bestimmt, die Istverzögerung mit einer vorgegebenen Sollverzögerung vergleicht und wobei die elektronische Steuereinrichtung (16) die Fahrantriebsmaschine (11) und die mechanische Bremseinrichtung (15) derart ansteuert, dass das einstellbare Bremsmoment (M) erhöht wird, wenn die Istverzögerung niedriger als die Sollverzögerung ist, und das einstellbare Bremsmoment (M) verringert wird, wenn die Istverzögerung höher als die Sollverzögerung ist.

6. Flurförderzeug nach Anspruch 5, **dadurch gekennzeichnet, dass** die Sollverzögerung in Abhängigkeit von zumindest einem Parameter des Flurförderzeugs, insbesondere der Fahrgeschwindigkeit und/oder der Last und/oder dem Lenkwinkel des Flurförderzeugs, vorgebbar ist.

7. Flurförderzeug nach einem der vorangegangenen Ansprüche, **dadurch gekennzeichnet, dass** die mechanische Bremseinrichtung (15) als elektromagnetisch betätigbare Federspeicherbremse oder als elektro-hydraulisch betätigbare Federspeicherbremse ausgebildet ist.

## Claims

1. Industrial truck (1) having an electric locomotion drive machine (11) which can be operated to perform braking as an electric engine brake with a variable braking torque (Mᵥₐᵣ), and with a mechanical brake device (15) which is operatively connected to the locomotion drive machine (11) and which can be acted on to move from a release position into a braking position and in the braking position has a permanently set braking torque value (M_{fix}), wherein in order to generate an adjustable braking torque (M) the engine brake of the locomotion drive machine (11) and the mechanical brake device (15) can be activated in a combined fashion, **characterized in that** in order to generate the adjustable braking torque (M) for the industrial truck (1) in a first range between a minimum braking torque (Mₘᵢₙ) and a maximum braking torque (Mₘₐₓ) starting from the minimum braking torque (Mₘᵢₙ) to the braking torque which corresponds to the permanently set braking torque value (M_{fix}) of the mechanical brake device (15), the mechanical brake device (15) is in the release position and the engine brake of the locomotion drive machine (11) is being acted on, with the result that the adjustable braking torque (M) for the industrial truck (1) is generated exclusively by the variable braking torque (Mᵥₐᵣ) of the engine brake of the locomotion drive machine (11), and in a second range starting from the braking torque which corresponds to the permanently set braking torque value (M_{fix}) of the mechanical brake device (15) up to the maximum braking torque (Mₘₐₓ) for the industrial truck (1) the mechanical brake device (15) is in the braking position and the engine brake of the locomotion drive machine (11) is being acted on, with the result that the adjustable braking torque (M) for the industrial truck (1) is generated by a common and simultaneous activation of the engine brake of the locomotion drive machine (11) and of the mechanical brake device (15), and the adjustable braking torque (M) for the industrial truck (1) is composed of the sum of the permanently set braking torque value (M_{fix}) of the mechanical brake device (15) and the variable braking torque value (Mᵥₐᵣ) of the engine brake of the locomotion drive machine (11).

2. Industrial truck according to Claim 1, **characterized in that** the adjustable braking torque (M) can be controlled as a function of at least one parameter (P) of the industrial truck, in particular the velocity and/or the load and/or the steering angle of the industrial truck.

3. Industrial truck according to Claim 1 or 2, **characterized in that** an electronic control device (16) is provided for controlling the locomotion drive machine (11) and the mechanical brake device (15).

4. Industrial truck according to Claim 3, **characterized in that** locking of a drive wheel (14) which is operatively connected to the locomotion drive machine (11) can be avoided during braking by means of the control device (16) by changing the adjustable braking torque (M).

5. Industrial truck according to Claim 3 or 4, **characterized in that** the electronic control device (16) is operatively connected to a sensor device (17) which senses the rotational speed of the locomotion drive machine (11), wherein the electronic control device (16) determines an actual deceleration from the signal of the sensor device (17), compares the actual deceleration with a predefined setpoint deceleration, and wherein the electronic control device (16) actuates the locomotion drive machine (11) and the mechanical brake device (15) in such a way that the adjustable braking torque (M) is increased if the actual deceleration is lower than the setpoint deceleration, and the adjustable braking torque (M) is reduced if the actual deceleration is higher than the setpoint deceleration.

6. Industrial truck according to Claim 5, **characterized in that** the setpoint deceleration can be predefined as a function of at least one parameter of the industrial truck, in particular the velocity and/or the load and/or the steering angle of the industrial truck.

7. Industrial truck according to one of the preceding claims, **characterized in that** the mechanical brake device (15) is embodied as a spring-loaded brake which can be activated electromagnetically or as a spring-loaded brake which can be activated electrohydraulically.

## Revendications

1. Chariot élévateur (1) présentant
une machine électrique (11) d'entraînement de roulage apte à être utilisée pour le freinage en tant que frein moteur électrique à couple de freinage (Mᵥₐᵣ) variable,
un dispositif mécanique de freinage (15) qui coopère avec la machine électrique (11) d'entraînement de roulage, apte à être amenée d'une position libre à une position de freinage et présentant en position de freinage un couple de freinage dont la valeur (M_{fix}) est fixée,
le frein moteur de la machine électrique (11) d'entraînement de roulage et le dispositif mécanique de freinage (15) pouvant être actionnés de manière combinée pour former un couple de freinage (M) réglable,
**caractérisé en ce que**
pour former le couple de freinage (M) réglable du chariot élévateur (1), entre un couple de freinage minimum (Mₘᵢₙ) et un couple de freinage maximum (Mₘₐₓ), à partir du couple de freinage minimum (Mₘᵢₙ) jusqu'au couple de freinage qui correspond au couple de freinage du dispositif mécanique de freinage (15) dont la valeur (M_{fix}) est fixée, le dispositif mécanique de freinage (15) est placé en position libre et le frein moteur de la machine électrique (11) d'entraînement de roulage est appliqué de telle sorte que le couple de freinage (M) réglable du chariot élévateur (1) soit formé exclusivement par le couple de freinage (Mᵥₐᵣ) variable du frein moteur de la machine électrique (11) d'entraînement de roulage, et dans une deuxième plage qui s'étend à partir du couple de freinage qui correspond au couple de freinage du dispositif mécanique de freinage (15) dont la valeur (M_{fix}) est fixée jusqu'au couple de freinage maximum (Mₘₐₓ) du chariot élévateur (1), le dispositif mécanique de freinage (15) est placé dans la position de freinage et le frein moteur de la machine électrique (11) d'entraînement de roulage est appliqué de telle sorte que le couple de freinage (M) réglable du chariot élévateur (1) soit formé par un actionnement commun et simultané du frein moteur de la machine électrique (11) d'entraînement de roulage et du dispositif mécanique de freinage (15), le couple de freinage (M) réglable du chariot élévateur (1) étant constitué de la somme du couple de freinage du dispositif mécanique de freinage (15) dont la valeur (M_{fix}) est fixée et du couple de freinage (Mᵥₐᵣ) variable du frein moteur de la machine électrique (11) d'entraînement de roulage.

2. Chariot élévateur selon la revendication 1, **caractérisé en ce que** le couple de freinage (M) réglable peut être commandé en fonction d'au moins un paramètre (P) du chariot élévateur, en particulier la vitesse de roulage, la charge et/ou l'angle de braquage du chariot élévateur.

3. Chariot élévateur selon les revendications 1 ou 2, **caractérisé en ce qu'**un dispositif électronique de commande (16) est prévu pour commander la machine électrique (11) d'entraînement de roulage et le dispositif mécanique de freinage (15).

4. Chariot élévateur selon la revendication 3, **caractérisé en ce que** le dispositif de commande (16) permet d'éviter pendant un freinage le blocage d'une roue motrice (14) qui coopère avec la machine électrique (11) d'entraînement de roulage en modifiant le couple de freinage (M) réglable.

5. Chariot élévateur selon les revendications 3 ou 4, **caractérisé en ce que** le dispositif de commande (16) coopère fonctionnellement avec un dispositif de capteur (17) qui saisit la vitesse de rotation de la machine électrique (11) d'entraînement de roulage, le dispositif de commande (16) déterminant le ralentissement effectif à partir du signal du dispositif de capteur (17), comparant le ralentissement effectif à un ralentissement de consigne prédéterminé, le dispositif de commande (16) commandant la machine électrique (11) d'entraînement de roulage et le dispositif mécanique de freinage (15) de telle sorte que le couple de freinage (M) réglable soit augmenté si le ralentissement effectif est inférieur au ralentissement de consigne et que le couple de freinage (M) réglable soit diminué si le ralentissement effectif est supérieur au ralentissement de consigne.

6. Chariot élévateur selon la revendication 5, **caractérisé en ce que** le ralentissement de consigne peut être prédéterminé en fonction d'au moins un paramètre du chariot élévateur, en particulier la vitesse de roulage, la charge et/ou l'angle de braquage du chariot élévateur.

7. Chariot élévateur selon l'une des revendications précédentes, **caractérisé en ce que** le dispositif mécanique de freinage (15) est configuré comme frein à accumulateur élastique actionné par voie électromagnétique ou comme frein à accumulateur élastique actionné par voie électro-hydraulique.
